(19)

Europäisches
Patentamt
European
Patent Office
Office européen
des brevets

(11) **EP 3 334 963 B1**

(12) **EUROPEAN PATENT SPECIFICATION**

(45) Date of publication and mention
of the grant of the patent:
**13.05.2020 Bulletin 2020/20**

(51) Int Cl.:
***F16K 1/22*** *(2006.01)* ***F16K 1/54*** *(2006.01)*

(21) Application number: **16754619.1**

(22) Date of filing: **12.08.2016**

(86) International application number:
**PCT/US2016/046657**

(87) International publication number:
**WO 2017/027761 (16.02.2017 Gazette 2017/07)**

(54) **DISK VALVES TO PROVIDE AN EQUAL PERCENTAGE FLUID FLOW CHARACTERISTIC**

TELLERVENTILE ZUR BEREITSTELLUNG EINER GLEICHANTEILIGEN
STRÖMUNGSEIGENSCHAFT

SOUPAPES À DISQUE PERMETTANT DE FOURNIR UNE CARACTÉRISTIQUE D'ÉCOULEMENT
FLUIDIQUE À POURCENTAGE ÉGAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.08.2015 US 201514824833**

(43) Date of publication of application:
**20.06.2018 Bulletin 2018/25**

(73) Proprietor: **Fisher Controls International LLC
Marshalltown, IA 50158 (US)**

(72) Inventors:
• **MORRISON, Kevin, Leslie
Marshalltown, IA 50158 (US)**

• **LEGER, Bryan, Q.
Marshalltown, IA 50158 (US)**

(74) Representative: **Petraz, Gilberto Luigi et al
GLP S.r.l.
Viale Europa Unita, 171
33100 Udine (IT)**

(56) References cited:
**CN-A- 102 359 607       US-A- 3 677 297
US-A1- 2003 122 100     US-A1- 2004 051 071
US-A1- 2004 149 952**

Printed by Jouve, 75001 PARIS (FR)

## Description

### FIELD OF THE DISCLOSURE

This patent relates generally to disk valves and, more particularly, to disk valves to provide an equal percentage fluid flow characteristic.

### BACKGROUND

Valves are commonly used to control fluid flow in process control systems. Some valves include a disk disposed in a valve body. In some instances, the flow of fluid through the valve is controlled by positioning the disk relative to the valve body. In some such instances, the disk transitions between a position that prevents fluid from flowing through the valve (e.g., a closed position) and a position that enables fluid to flow freely through the valve (e.g., an open position). Known butterfly valves are described for example in the documents US 2004/0149952 A1 and US 2004/0051071 A1.

### SUMMARY

In one example, an apparatus includes a disk body, a sealing surface of the disk body to form a seal with a valve body in a closed position, and a wall protruding from the disk body. The wall includes an outer surface adjacent a portion of the sealing surface and a depression defined by the outer surface of the wall. The outer surface and the depression provide a substantially equal percentage fluid flow characteristic when the disk body transitions between the closed position and an open position.

In another example, an apparatus includes a valve body and a valve disk to control fluid flow through the valve body. The valve disk includes a sealing surface to form a seal with the valve body in a closed position, a first side to engage fluid flowing through the valve body, and a wing protruding from a second side opposite the first side. The wing includes an outer surface adjacent a portion of the sealing surface and a depression defined by a portion of the outer surface. The outer surface and the depression provide a substantially equal percentage fluid flow characteristic when the valve disk transitions between the closed position and an open position.

In another example, an apparatus includes means for controlling fluid flow, means for sealing the means for controlling with a valve body in a closed position, and means for providing a substantially equal percentage fluid flow characteristic when the means for controlling fluid flow transitions between the closed position and an open position.

### BRIEF DESCRIPTION OF THE DRAWINGS

FIGS. 1A-1B depict an example valve disk in accordance with the teachings therein.

FIG. 2A depicts a cross-sectional view of an example valve having the example valve disk of FIGS. 1A-1B in a closed position.

FIG. 2B depicts a cross-sectional view of the example valve of FIG. 2A having the example valve disk of FIGS. 1A-1B in a partially open position.

FIG. 2C depicts a cross-sectional view of the example valve of FIGS. 2A-2B having the example valve disk of FIGS. 1A-1B in an open position.

FIG. 3 depicts an equal percentage fluid flow characteristic as the example valve of FIGS. 2A-2C transitions between the closed position and the open position.

FIGS. 4A-4B depict another example valve disk that is not forming part of the present invention.

FIGS. 5A-5B depict another example valve disk in accordance with the teachings therein.

FIGS. 6A-6B depict another example valve disk that is not forming part of the present invention.

FIGS. 7A-7B depict another example valve disk that is not forming part of the present invention.

The figures are not to scale. Instead, to clarify multiple layers and regions, the thicknesses of the layers may be enlarged in the drawings. Wherever possible, the same reference numbers will be used throughout the drawing(s) and accompanying written description to refer to the same or like parts.

### DETAILED DESCRIPTION

Many known process control systems employ valves to control a flow of fluid (e.g., liquid, gas, etc.). Some known valves (e.g., butterfly valves) include a valve body that defines a passageway and a disk disposed within the passageway to control fluid flow through the passageway. The disk may be coupled to a drive shaft that rotates the disk relative to the valve body to adjust the flow of fluid through the passageway. For example, the shaft may rotate the disk between a fully closed position and a fully open position.

In the fully closed position, the disk may be oriented such that a surface of the disk is perpendicular to an axis of the passageway to prevent fluid from flowing through the passageway. In the fully open position, the disk may be oriented such that the surface of the disk is parallel to the axis of the passageway to enable fluid to flow freely through the passageway.

Some known valves allow the disks to be oriented in partially open position(s) between the fully open position and the fully closed position. For example, a disk may be oriented in a partially open position to provide restricted fluid flow (e.g., relative to the fluid flow associated with the fully open position) through the passageway of the valve. Some known valves provide a linear fluid flow characteristic such that the fluid flow increases at a constant rate as the valve transitions between the closed position and the open position at a constant rate. Other known valves provide a quick-opening fluid flow characteristic such that a rate of fluid flow increases quickly as the valve transitions from the fully closed position and increases more slowly as the disk approaches the fully open position.

The present invention is defined by the appended claims. The example apparatus disclosed herein provides a substantially equal percentage fluid flow characteristic and, thus, increased resolution of fluid flow control (particularly at relatively low flow rates near the fully closed position) as a valve disk rotates between a fully closed position and a fully open position (i.e., over the entire control range of the valve). The example apparatus provide the substantially equal percentage characteristic such that a flow rate increases by a substantially equal percentage for equal increments of rotation of the valve disk. For example, the flow rate increases by a percentage when the valve disk rotates from 10 degrees to 20 degrees (e.g., a 10 degree rotation) relative to a closed position and increases by a substantially similar percentage when the example valve disk rotates from 40 degrees to 50 degrees (e.g., another 10 degrees of rotation) relative to the closed position. As a result, the substantially equal percentage characteristic enables precise control of the fluid flow at substantially low fluid flows (e.g., when the valve disk is near the closed position) and enables the valve to quickly increase fluid flow at substantially high fluid flows (e.g., when the valve disk is near the open position).

The example apparatus disclosed herein include a wall or wing protruding from the valve disk that reduces a flow rate of the valve to provide a substantially equal percentage fluid flow characteristic when the valve disk is near the closed position. To provide the substantially equal percentage characteristic when the valve disk is oriented between about 10 degrees and 35 degrees from the closed position, the wing includes a depression (e.g., a flat surface, a notch, a recessed curved surface, a groove) that further adjusts (e.g., moderates or lessens the reduction of) the flow rate of the valve. In some examples, the wing includes a plurality of depressions to further adjust the flow rate of the valve.

Example valve disks disclosed herein include a disk body and a sealing surface of the disk body that is to form a seal with a valve body in a closed position. The example valve disks include a wall (e.g., a wing) that protrudes from the disk body. The wall includes an outer surface that is adjacent a portion of the sealing surface and a depression defined by the outer surface of the wall. The outer surface and the depression of the wall of the example valve disks provide a substantially equal percentage fluid flow characteristic and, thus, improved resolution of fluid flow control as the example valve disks transition between the closed position and an open position.

According to the invention, the sealing surface has a first radius of curvature and the outer surface of the wall has a second radius of curvature that is different than the first radius of curvature. In some such examples, the second radius of curvature enables the wall to provide a substantially equal percentage fluid flow characteristic and increased fluid flow control resolution at low fluid flow rates.

In some examples, the depression enables the wall to provide the substantially equal percentage fluid flow characteristic when the valve disk is oriented between about 10 degrees and 35 degrees from the closed position. In some examples, the depression is a flat surface that extends along a plane parallel to an axis of the valve body. In some examples, the depression is a notch that has a triangular profile extending into the disk body. In some examples, the depression has a curved profile that is recessed from the outer surface of the wall. In some examples, the depression is a channel that extends circumferentially along the outer surface of the wall.

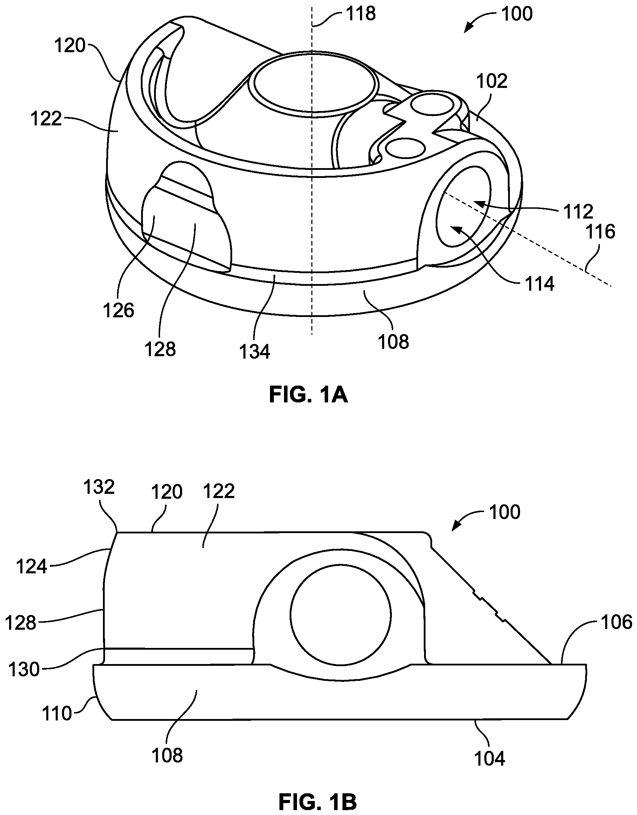

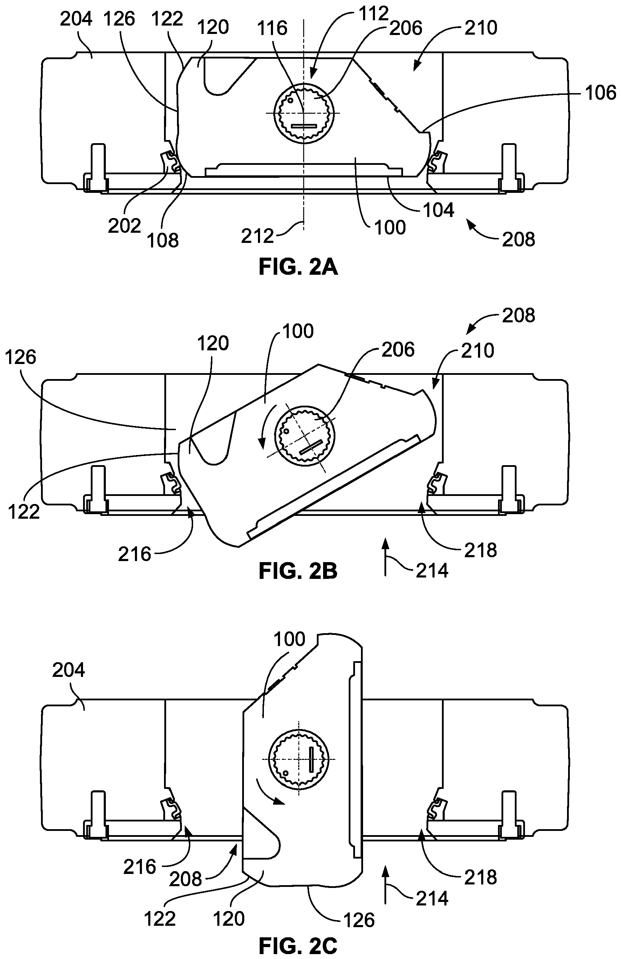

Turning to the figures, FIGS. 1A-1B depict an example flow control member or valve disk 100 in accordance with the teachings therein. In particular, FIG. 1A is a perspective view of the example valve disk 100, and FIG. 1B is a side view of the example valve disk 100. The valve disk 100 includes a disk body 102 having a first side 104 and a second side 106 opposite the first side 104. In the illustrated example, a sealing surface 108 extends around an outer circumference of the disk body 102 adjacent the first side 104. The sealing surface 108 is to sealingly engage a valve seat of a valve body (e.g., a valve seat 202 of a valve body 204 of FIGS. 2A-2C) to prevent fluid from flowing when the valve disk 100 is oriented in a closed position (FIG. 2A). As illustrated in FIG. 1A, the sealing surface 108 has a radius of curvature 110 that enables the sealing surface 108 to engage and/or disengage from the valve seat as the valve disk 100 transitions to and/or from the closed position.

In the illustrated example, the valve disk 100 defines an aperture 112 to receive a shaft (e.g., a shaft 206 of FIGS. 2A-2C). For example, the valve disk 100 defines a first opening 114 of the aperture 112 and a second opening opposite the first opening 114 to receive the shaft. The aperture 112 receives the shaft to enable the shaft to rotate the valve disk 100 between the closed position (FIG. 2A) and an open position (FIG. 2C). In the illustrated example, the aperture 112 extends along a longitudinal axis 116 that is perpendicular to a central axis 118 of the valve disk 100.

As illustrated in FIGS. 1A-1B, a wall or wing 120 protrudes from the second side 106 of the disk body 102 and extends partially around the outer circumference of the disk body 102. For example, the wing 120 extends around about half of the outer circumference of the disk body 102 from about the first opening 114 to about the second opening of the aperture 112. The wing 120 defines an outer surface 122 having a radius of curvature 124 different than the radius of curvature 110. As illustrated in FIGS. 1A-1B, the outer surface 122 defines a depression 126. In the illustrated example, the depression 126 is a flat surface 128 that extends along a plane parallel to the central axis 118 of the valve disk 100. For example, the flat surface 128 extends from a first end 130 of the wing 120 to adjacent an opposing second end 132 of the wing 120. The flat surface 128 of the illustrated example is equidistant between the first opening 114 and the second opening of the aperture 112. In some examples, the outer surface 122 of the valve disk 100 defines a plurality of depressions (e.g., a plurality of flat surfaces).

The wing 120 of the illustrated example enables the valve disk 100 to provide a substantially equal percentage fluid flow characteristic as the valve disk 100 transitions between a closed position and an open position. A flow characteristic is characterized by a ratio between a flow coefficient (Cv) of a valve (e.g., a disk valve 208 of FIGS. 2A-2C) and a degree of rotation of the valve disk 100. The flow coefficient represents a flow capacity of the valve when the valve disk 100 is oriented in a respective position. For a valve having an equal percentage characteristic, the flow coefficient increases by a substantially equal percentage for equal increments of rotation of the valve disk 100. For example, the valve disk 100 of the illustrated example provides a substantially equal percentage characteristic because the flow characteristic of the valve increases by a substantially equal percentage (e.g., 3.5%) when the valve disk 100 rotates from 10 degrees to 20 degrees from the closed position as when the valve disk 100 rotates from 40 degrees to 50 degrees from the closed position.

In the illustrated example, the depression 126 and the radius of curvature 124 of the outer surface 122 enable the wing 120 to provide the substantially equal percentage characteristic. For example, the radius of curvature 124 enables the valve disk 100 to provide the substantially equal percentage characteristic by reducing the fluid flow when the valve disk 100 approaches the closed position. The depression 126 of the wing 120 enables the valve disk 100 to provide the substantially equal percentage characteristic by further adjusting (e.g., moderating or lessening the reduction of) the fluid flow when the valve disk 100 is oriented between about 10 degrees and 35 degrees from the closed position. The substantially equal percentage characteristic provided by the valve disk 100 enables the fluid flow to be controlled with precision at substantially low fluid flows (e.g., when the valve disk 100 is near the closed position) and enables the fluid flow to increase quickly at substantially high fluid flows (e.g., when the valve disk 100 is near the open position).

As illustrated in FIGS. 1A-1B, the valve disk 100 also includes an indentation 134 that extends around the outer circumference of the disk body 102 between the outer surface 122 of the wing 120 and the sealing surface 108. The indentation 134 provides a transition between the radius of curvature 110 of the sealing surface 108 that enables the sealing valve disk 100 to sealingly engage the valve body and the radius of curvature 124 of the outer surface 122 that provides the substantially equal percentage characteristic as the valve disk 100 rotates.

FIGS. 2A-2C depicts a cross-sectional view of the example disk valve 208 when the valve disk 100 is oriented at different respective positions relative to the valve body 204. In particular, FIG. 2A illustrates the disk valve 208 in a closed position, FIG. 2B illustrates the disk valve 208 in a partially open position, and FIG. 2C illustrates the disk valve 208 in an open position. In the illustrated example, the valve disk 100 is disposed in a passageway 210 defined by the valve body 204 to control fluid flow through the disk valve 208. As illustrated in FIGS. 2A-2C, the shaft 206 is received by the aperture 112 of the valve disk 100 and rotates the valve disk 100 about the axis 116 between the closed and open positions.

In the illustrated example of FIGS. 2A-2C, the first side 104 of the valve disk 100 is positioned on an upstream side of the passageway 210 and the opposing second side 106 of the valve disk 100 is positioned on a downstream side of the passageway 210 (e.g., the valve disk 100 is oriented to control forward flow through the passageway 210). In other examples, the first side 104 of the valve disk 100 is positioned on a downstream side of the passageway 210 and the second side 106 is positioned on an upstream side of the passageway 210 (e.g., the valve disk 100 is oriented to control reverse flow through the passageway 210)

As illustrated in FIG. 2A, the valve disk 100 is perpendicular to a longitudinal axis 212 of the passageway 210 in the closed position. To prevent fluid from flowing through the passageway 210 in the closed position, the sealing surface 108 of the valve disk 100 sealingly engages the valve seat 202 of the valve body 204. As illustrated in FIG. 2A, the outer surface 122 and the depression 126 of the wing 120 are spaced apart from the sealing surface 108 when the valve disk 100 is in the closed position. Thus, the outer surface 122 and the depression 126 that provide the equal percentage fluid flow characteristic do not prevent the sealing surface 108 from forming a seal with the valve seat 202.

FIG. 2B depicts the disk valve 208 in the partially open position in which the valve disk 100 is rotated about 30 degrees in a counterclockwise direction relative to the closed position of FIG. 2A. For example, the valve disk 100 is rotated counterclockwise 30 degrees via the shaft 206. In the partially open position illustrated in FIG. 2B, a flow path 214 is created in the passageway 210 that enables fluid to flow through the disk valve 208. For example, a first portion 216 of the flow path 214 is created adjacent the wing 120 of the valve disk 100 and a second portion 218 of the flow path 214 is created opposite the first portion 216. In the illustrated example, the flow path 214 indicates forward flow through the passageway 210 (e.g., fluid flows in a direction from adjacent the first side 104 to adjacent the second side 106 of the valve disk 100). Additionally or alternatively, the disk valve 208 may control reverse flow through the passageway 210 (e.g.,

fluid flows in a direction from adjacent the second side 106 to adjacent the first side 104 of the valve disk 100).

As illustrated in FIG. 2B, the outer surface 122 of the wing 120 reduces the first portion 216 of the flow path 214 when the valve disk 100 is near the closed position, thereby reducing the flow capacity (Cv) of the disk valve 208 in such a position. For example, the outer surface 122 of the wing 120 reduces the first portion 216 of the flow path 214 to produce the substantially equal percentage characteristic when the disk valve 208 is in the partially open position of FIG. 2B. The depression 126 of the wing 120 further adjusts (e.g., moderates or lessens the reduction of) the first portion 216 of the flow path 214 when the valve disk 100 is oriented between about 10 degrees and 35 degrees from the closed position, thereby further adjusting (e.g., moderating or lessening the reduction of) the flow capacity of the disk valve 208 in such a position. For example, the depression 126 adjusts the first portion 216 of the flow path 214 to produce the substantially equal percentage characteristic when the disk valve 208 is in the partially open position of FIG. 2B.

FIG. 2C depicts the open position of the disk valve 208 in which the valve disk 100 is rotated about 90 degrees in a counterclockwise direction relative to the closed position of FIG. 2A. As illustrated in FIG. 2C, the first portion 216 and the second portion 218 of the flow path 214 increase in size (e.g., increase in cross-sectional area) relative to the partially open position of FIG. 2B, thereby increasing the flow capacity of disk valve 208 relative to the partially open position. For example, in the open position, the flow path 214 produces a maximum flow capacity of the disk valve 208. As illustrated in FIG. 2C, the wing 120 of the valve disk 100 is substantially spaced apart from the valve body 204 in the open position. Thus, the outer surface 122 and the depression 126 of the wing 120 do not substantially reduce and/or alter the flow capacity of the disk valve 208 when the disk valve 208 is in and/or near the open position. As a result, the wing 120 maintains the substantially equal percentage characteristic when the valve disk 100 approaches the open position.

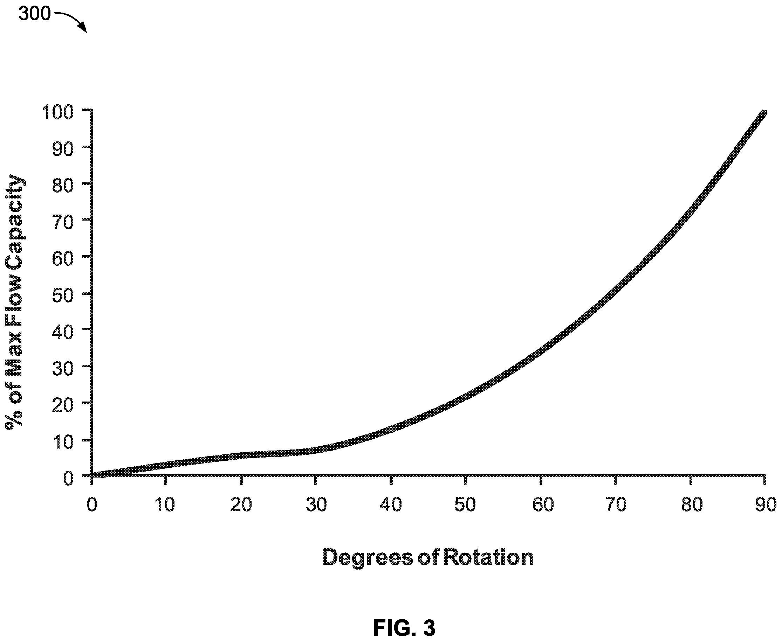

FIG. 3 is a chart 300 that depicts the substantially equal percentage fluid flow characteristic of the valve disk 208 (FIGS. 2A-2C) as the valve disk 100 (FIGS. 1A-1B) rotates between the closed position and the open position. As illustrated in FIG. 3, the percentage of the maximum flow capacity of the disk valve 208 is shown for a range of degrees of rotation relative to the closed position. For example, the example chart 300 indicates that the flow capacity is approximately 0% of the maximum flow capacity when the valve disk 100 is rotated 0 degrees (e.g., the closed position), approximately 20% of the maximum flow capacity when the valve disk 100 is rotated about 45 degrees, and approximately 100% of the maximum flow capacity when the valve disk is rotated 90 degrees (e.g., the fully open position).

The flow characteristic of the illustrated example is a substantially equal percentage characteristic such that the flow capacity increases by a substantially equal percentage for equal increments of rotation of the valve disk 100. For example, the substantially equal percentage characteristic of the disk valve 208 is represented by a substantially constant point slope factor in accordance with Equation 1 provided below.

$$n' = \frac{Y_i - Y_{i-1}}{(X_i - X_{i-1}) \cdot Y_i}$$

Equation 1

In Equation 1, *n'* the point slope factor, $X_{i-1}$ represents an angle of rotation of the valve disk 100 at a first orientation, $X_i$ represents an angle of rotation of the valve disk 100 at a subsequent second orientation, $Y_{i-1}$ represents a flow capacity of the first orientation, and $Y_i$ represents a flow capacity of the second orientation.

The example disk valve 208 has a substantially constant point slope factor of about 3.5%. Thus, the flow capacity of the disk valve 208 increases by about 3.5% for every 10 degree increase in rotation. For example, the increase in flow capacity associated with rotating the valve disk 100 from 10 degrees to 20 degrees is about 3.5%, from 35 degrees to 45 degrees is about 3.5%, and from 72 degrees to 82 degrees is about 3.5%. Thus, the outer surface 122 and the depression 126 of the example disk valve 100 produce a substantially equal percentage fluid flow characteristic as the disk valve 208 transitions between the closed position and the open position.

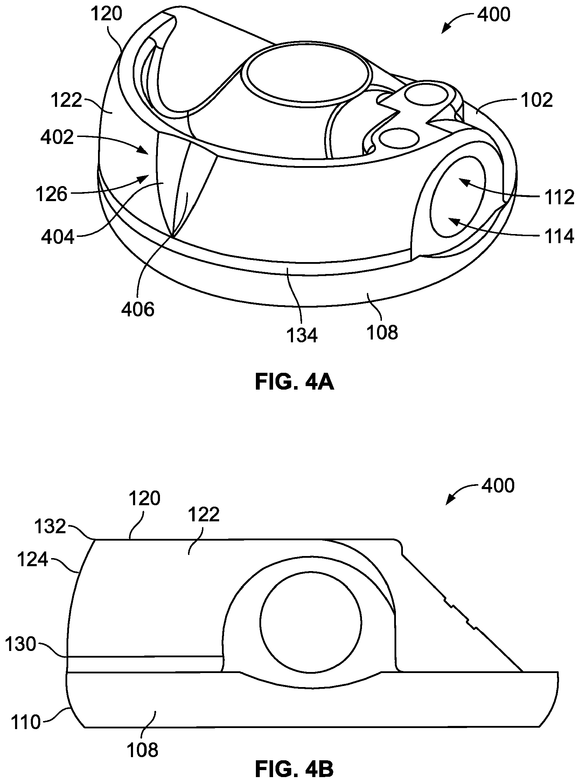

FIGS. 4A-4B, 5A-5B, 6A-6B, and 7A-7B depict other example flow control members or valve disks 400, 500, 600, 700, respectively, that provide a substantially equal percentage fluid flow characteristic as the valve disks 400, 500, 600, 700 rotate between a closed position and an open position. To provide the substantially equal percentage characteristic, the example valve disks 400, 500, 600, 700 include the wing 120 having the outer surface 122 and the depression 126. In some examples, the valve disks 400, 500, 600, 700 have a plurality of depressions to provide the substantially equal percentage characteristic. For example, the valve disks 400, 500, 600, 700 provide a substantially equal percentage characteristic associated with about a 3.5% increase of flow capacity for about each 10 degree increase in rotation. Further, the outer surface 122 and the depression 126 of the wing 120 are spaced apart from the sealing surface 108 of the valve disks 400, 500, 600, 700 to provide the equal percentage characteristic without preventing the sealing surface 108 from forming a seal in the closed position.

FIG. 4A is a perspective view of the example valve disk 400, and FIG. 4B is a side view of the example valve disk 400. As illustrated in FIGS. 4A-4B, the depression 126 of the wing 120 is a notch 402 that extends into the wing 120. For example, the notch 402 is defined by a first surface 404 and an adjoining second surface 406 that form a triangular profile. In the illustrated example, the notch 402 extends from the first end 130 of the wing 120 to the opposing second end 132 of the wing 120 and is equidistant between the first opening 114 and the second opening of the aperture 112. In the illustrated example, the radius of curvature 124 of the outer surface 122 of the wing 120 is different than the radius of curvature 110 of the sealing surface 108. The indentation 134 extends around the outer circumference of the disk body 102 between the outer surface 122 of the wing 120 and the sealing surface 108 to provide a transition between the radius of curvature 110 of the sealing surface 108 that enables the valve disk 400 to sealingly engage the valve body 204 (FIGS. 2A-2C) and the radius of curvature 124 of the outer surface 122 that provides the substantially equal percentage characteristic of the valve disk 400.

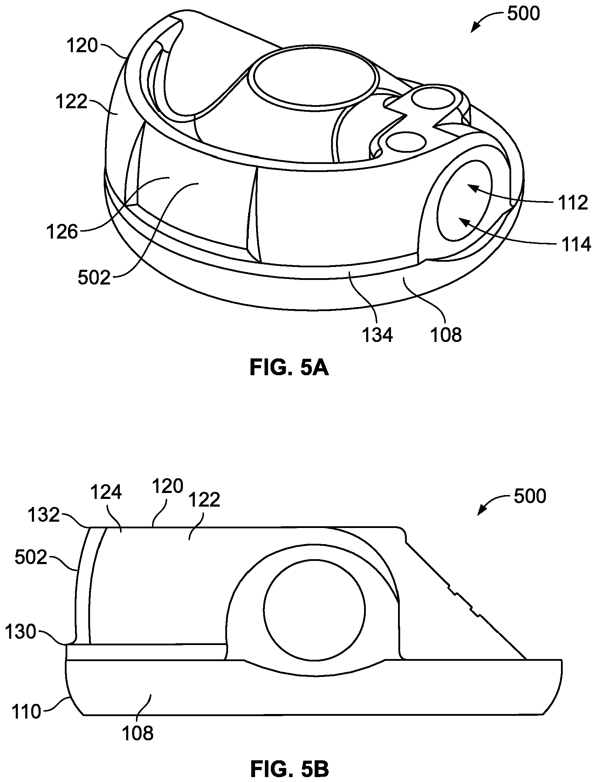

FIG. 5A is a perspective view of the example valve disk 500, and FIG. 5B is a side view of the example valve disk 500. In the illustrated example, the depression 126 of the wing 120 is a surface 502 having a curved profile. For example, the surface 502 is recessed from the outer surface 122 of the wing 120. The recessed surface 502 of the illustrated example extends from the first end 130 of the wing 120 to the opposing second end 132 of the wing 120 and is equidistant between the first opening 114 and the second opening of the aperture 112. In the illustrated example, the radius of curvature 124 of the outer surface 122 of the wing 120 is different than the radius of curvature 110 of the sealing surface 108. The indentation 134 extends between the outer surface 122 and the sealing surface 108 to provide a transition between the radius of curvature 110 of the sealing surface 108 that enables the valve disk 500 to sealingly engage the valve body 204 (FIGS. 2A-2C) and the radius of curvature 124 of the outer surface 122 that provides the substantially equal percentage of the valve disk 500.

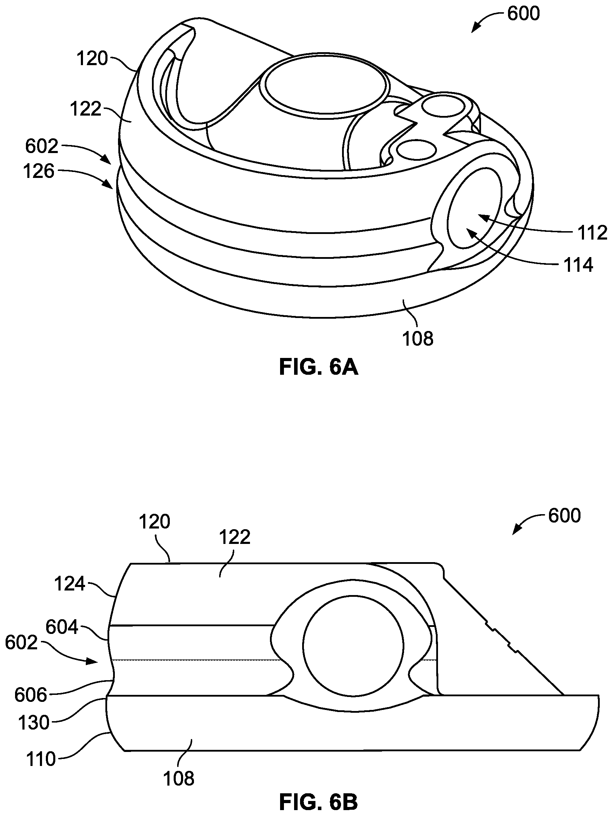

FIG. 6A is a perspective view of the example valve disk 600, and FIG. 6B is a side view of the example valve disk 600. In the illustrated example, the depression 126 of the wing 120 is a channel 602 that extends circumferentially along the outer surface 122 of the wing 120. For example, the channel 602 extends from about the first opening 114 to about the second opening of the aperture 112. The channel 602 of the illustrated example is adjacent the first end 130 of the wing 120. As illustrated in FIG. 6B, the channel 602 includes a first portion 604 that has a convex profile and an adjoining second portion 606 that has a concave profile. In the illustrated example, the second portion 606 of the channel is between the first end 130 of the wing 120 and the first portion 604 of the channel 602. The channel 602 of the wing 120 provides a transition between the radius of curvature 110 of the sealing surface 108 that enables the valve disk 600 to sealingly engage the valve body 204 (FIGS. 2A-2C) and the radius of curvature 124 of the outer surface 122 that provides the substantially equal percentage of the valve disk 600.

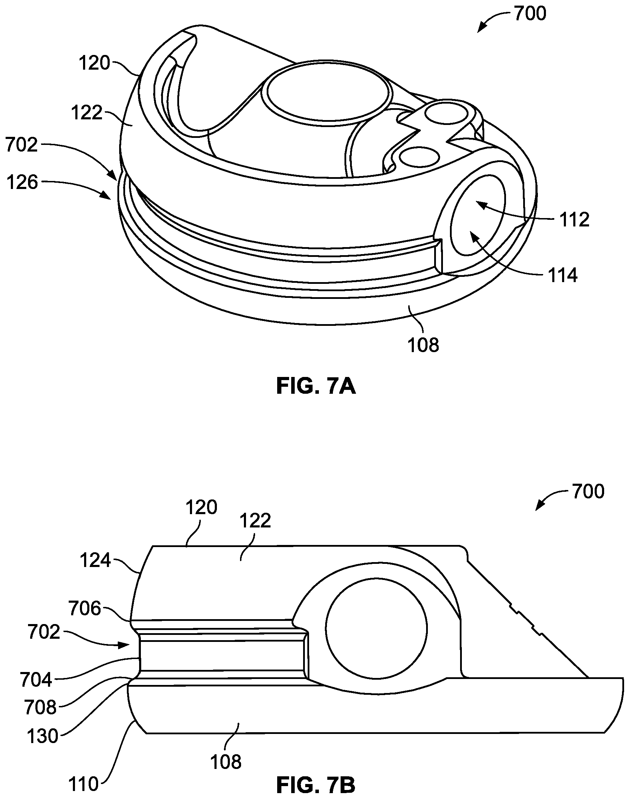

FIG. 7A is a perspective view of the example valve disk 700, and FIG. 7B is a side view of the example valve disk 700. As illustrated in FIGS. 7A-7B, the depression 126 of the wing 120 is a channel 702 that extends circumferentially along the outer surface 122 of the wing 120. In the illustrated example, the channel 702 extends from about the first opening 114 to about the second opening of the aperture 112. The channel 702 of the illustrated example is adjacent the first end 130 of the wing 120. As illustrated in FIG. 7B, the channel 702 includes a surface 704 that is recessed relative to the outer surface 122 of the wing 120. A first curved portion 706 provides a smooth transition between the surface 704 of the channel 702 and the outer surface 122 of the wing 120, and a second curved portion 708 provides a smooth transition between the surface 704 of the channel 702 and the sealing surface 108 of the valve disk 700. As illustrated in FIG. 7B, the channel 702 provides a transition between the radius of curvature 110 of the sealing surface 108 that enables the valve disk 700 to sealingly engage the valve body 204 (FIGS. 2A-2C) and the radius of curvature 124 of the outer surface 122 that provides the substantially equal percentage of the valve disk 700.

Although certain example apparatus have been described herein, the scope of coverage of this patent is not limited thereto. On the contrary, this patent covers all methods, apparatus and articles of manufacture falling within the scope of the amended claims.

**Claims**

1. An apparatus comprising:
a disk body (102) including:

a first side (104), a second side (106) opposite the first side (104) and a central axis (118); a sealing surface (108), the sealing surface (108) extending around an outer circumference of the disk body (102) adjacent the first side (104), the sealing surface (108) having a radius of curvature (110) adapted to sealingly engage a valve body (204) in a closed position; and a wall (120), the wall (120) protruding from the second side of the disk body (102) and extending at least partially around the outer circumference of the disk body (102), **characterised in that** the wall (120) includes an outer surface (122) adjacent the sealing surface and having a radius of curvature (124) different than the radius of curvature (110) of the sealing surface (108) and adapted to enable the apparatus (100) to provide a substantially equal percentage fluid flow characteristic, the outer surface (122) defining a depression (126), the depression (126) comprising a flat surface (128) extending along a plane parallel to the central axis (118) of the disk body (102) from adjacent the sealing surface (108) toward an end (132) of the wall (120), wherein the outer surface (122) and the depression (126) provide a substantially equal percentage fluid flow characteristic when the disk body (102) transitions between the closed position and an open position.

2.  The apparatus of any of claim 1, further comprising an indentation (134) extending around the circumference of the disk body (102) between the sealing surface (108) and the outer surface (122) of the wall (120).

3.  The apparatus of claim 2, wherein the flat surface (128) enables the wall (120) to provide the substantially equal percentage fluid flow characteristic when the disk body (102) is positioned between about 10 degrees and 35 degrees from a closed position.

4.  An apparatus comprising:

    a valve body (204);
    a valve disk (100) configured to control fluid flow through the valve body (204), the valve disk (100) comprising:

        a first side (104) and a second side (106) opposite the first side (104);
        a sealing surface (108), the sealing surface (108) extending around an outer circumference of the valve disk (100) adjacent the first side (104), the sealing surface (108) having a radius of curvature (110) adapted to sealingly engage the valve body (204) in a closed position;
        a wall (120), the wall (120) protruding from the second side (106) of the valve disk (100) and partially extending around the outer circumference of the valve disk (100), **characterised in that** the wall (120) includes an outer surface (122) adjacent a portion of the sealing surface (108) and having a radius of curvature (124) different than the radius of curvature (110) of the sealing surface (108) and adapted to enable the valve disk (100) to provide a substantially equal percentage fluid flow characteristic, the outer surface (122) defining a depression (126) comprising a recessed surface (502) having a curved profile; and
        an indentation (134), the indentation (134) extending around the outer circumference of the disk body (102) between the sealing surface (108) and the outer surface (122) of the wall (120), the recessed surface (502) extending from the indentation (134) to an end (132) of the wall (120), wherein the outer surface (122) and the depression (126) provide a substantially equal percentage fluid flow characteristic when the valve disk (100) transitions between the closed position and an open position.

5.  The apparatus of claim 4, wherein the depression (126) provides the substantially equal percentage fluid flow characteristic when the valve disk (100) is oriented between about 10 degrees and 35 degrees from the closed position.

6.  The apparatus of claim 4 or 5, wherein the valve disk (100) defines an aperture (112) adapted to receive a shaft (206), the aperture (112) extending perpendicular to a central axis of the valve disk (100), the valve disk (100) configured to rotate about a longitudinal axis of the aperture (112).

7.  The apparatus of claim 6, wherein the depression is about equidistant between a first opening of the aperture (112) and an opposing second opening of the aperture (112).

**Patentansprüche**

1.  Vorrichtung, aufweisend:
    einen Plattenkörper (102), aufweisend:

        eine erste Seite (104), eine zu der ersten Seite (104) entgegengesetzte zweite Seite (106) und eine zentrale Achse (118),
        eine Dichtfläche (108), wobei sich die Dichtfläche (108) um einen Außenumfang des Plattenkörpers (102) benachbart zu der ersten Seite (104) erstreckt, wobei die Dichtfläche (108) einen Krümmungsradius (110) hat, der angepasst ist, um in einer Schließposition dichtend mit einem Ventilkörper (204) in Eingriff zu sein, und eine Wand (120), wobei die Wand (120) von der zweiten Seite des Plattenkörpers (102) aus hervorsteht und sich zumindest teilweise um den Außenumfang des Plattenkörpers (102) erstreckt, **dadurch gekennzeichnet, dass** die Wand (120) eine Außenfläche (122) aufweist, die benachbart zu der Dichtfläche ist und einen Krümmungsradius (124) hat, der sich von dem Krümmungsradius (110) der Dichtfläche (108) unterscheidet, und angepasst ist, um zu ermöglichen, dass die Vorrichtung (100) eine im Wesentlichen gleichprozentige Fluidströmungseigenschaft bereitstellt, wobei die Außenfläche (122) eine Vertiefung (126) definiert, wobei die Vertiefung (126) eine flache Fläche (128) aufweist, die sich entlang einer Ebene parallel zu der zentralen Achse (118) des Plattenkörpers (102) von benachbart zu der Dichtfläche (108) in Richtung zu einem Ende (132) der Wand (120) erstreckt, wobei die Außenfläche (122) und die Vertiefung (126) eine im Wesentlichen gleichprozentige Fluidströmungseigenschaft bereitstellen, wenn der Plattenkörper (102) im Übergang zwischen der Schließposition und einer Öffnungsposition ist.

2.  Vorrichtung gemäß irgendeinem von Anspruch 1, ferner aufweisend eine Einkerbung (134), die sich um den Umfang des Plattenkörpers (102) zwischen der Dichtfläche (108) und der Außenfläche (122) der Wand (120) erstreckt.

3.  Vorrichtung gemäß Anspruch 2, wobei die flache Fläche (128) ermöglicht, dass die Wand (120) die im Wesentlichen gleichprozentige Fluidströmungseigenschaft bereitstellt, wenn der Plattenkörper (102) von einer Schließposition aus zwischen etwa 10 Grad und 35 Grad positioniert ist.

4.  Vorrichtung, aufweisend:

    einen Ventilkörper (204),
    eine Ventilplatte (100), die konfiguriert ist, um den Fluidstrom durch den Ventilkörper (204) hindurch zu steuern, wobei die Ventilplatte (100) aufweist:

    eine erste Seite (104) und eine zu der ersten Seite (104) entgegengesetzte zweite Seite (106),
    eine Dichtfläche (108), wobei sich die Dichtfläche (108) um einen Außenumfang der Ventilplatte (100) herum benachbart zu der ersten Seite (104) erstreckt, wobei die Dichtfläche (108) einen Krümmungsradius (110) hat, der angepasst ist, um in einer Schließposition dichtend mit dem Ventilkörper (204) in Eingriff zu sein,
    eine Wand (120), wobei die Wand (120) von der zweiten Seite (106) der Ventilplatte (100) aus hervorsteht und sich teilweise um den Außenumfang der Ventilplatte (100) herum erstreckt, **dadurch gekennzeichnet, dass** die Wand (120) eine Außenfläche (122) aufweist, die benachbart zu einem Abschnitt der Dichtfläche (108) ist und einen Krümmungsradius (124) hat, der sich von dem Krümmungsradius (110) der Dichtfläche (108) unterscheidet, und angepasst ist, um zu ermöglichen, dass die Ventilplatte (100) eine im Wesentlichen gleichprozentige Fluidströmungseigenschaft bereitstellt, wobei die Außenfläce (122) eine Vertiefung (126) definiert, die eine Aussparungsfläche (502) mit einem Krümmungsprofil aufweist, und eine Einkerbung (134), wobei sich die Einkerbung (134) um den Außenumfang des Plattenkörpers (102) zwischen der Dichtfläche (108) und der Außenfläche (122) der Wand (120) erstreckt, wobei sich die Aussparungsfläche (502) von der Einkerbung (134) zu einem Ende (132) der Wand (120) erstreckt, wobei die Außenfläche (122) und die Vertiefung (126) eine im Wesentlichen gleichprozentige Fluidströmungseigenschaft bereitstellen, wenn die Ventilplatte (100) im Übergang zwischen der Schließposition und einer Öffnungsposition ist.

5.  Vorrichtung gemäß Anspruch 4, wobei die Vertiefung (126) die im Wesentlichen gleichprozentige Fluidströmungseigenschaft bereitstellt, wenn die Ventilplatte (100) von der Schließposition aus zwischen etwa 10 Grad und 35 Grad ausgerichtet ist.

6.  Vorrichtung gemäß Anspruch 4 oder 5, wobei die Ventilplatte (100) eine Öffnung (112) definiert, die angepasst ist, um einen Schaft (206) aufzunehmen, wobei sich die Öffnung (112) senkrecht zu einer zentralen Achse der Ventilplatte (100) erstreckt, wobei die Ventilplatte (100) konfiguriert ist, um sich um eine Längsachse der Öffnung (112) zu drehen.

7.  Vorrichtung gemäß Anspruch 6, wobei die Vertiefung etwa in gleichem Abstand zwischen einer ersten Öffnung der Öffnung (112) und einer gegenüberliegenden zweiten Öffnung der Öffnung (112) ist.

**Revendications**

1.  Appareil comprenant :

    un corps de disque (102) comprenant :

    un premier côté (104), un second côté (106) opposé au premier côté (104) et un axe central (118) ;
    une surface d'étanchéité (108), la surface d'étanchéité (108) s'étendant autour d'une circonférence extérieure du corps de disque (102) adjacente au premier côté (104), la surface d'étanchéité (108) ayant un rayon de courbure (110) adapté pour venir en prise de manière étanche avec un corps de soupape (204) dans une position fermée ; et
    une paroi (120), la paroi (120) faisant saillie à partir du second côté du corps de disque (102) et s'étendant au moins partiellement autour de la circonférence extérieure du corps de disque (102), **caractérisé en ce que** la paroi (120) comprend

une surface extérieure (122) adjacente à la surface d'étanchéité et ayant un rayon de courbure (124) différent du rayon de courbure (110) de la surface d'étanchéité (108) et adapté pour permettre à l'appareil (100) de fournir une caractéristique d'écoulement de fluide à pourcentage sensiblement égal, la surface extérieure (122) définissant un enfoncement (126), l'enfoncement (126) comprenant une surface plate (128) s'étendant le long d'un plan parallèle à l'axe central (118) du corps de disque (102) à partir d'un endroit adjacent à la surface d'étanchéité (108) vers une extrémité (132) de la paroi (120), dans lequel la surface extérieure (122) et l'enfoncement (126) fournissent une caractéristique d'écoulement de fluide à pourcentage sensiblement égal lorsque le corps de disque (102) effectue une transition entre la position fermée et une position ouverte.

2. Appareil selon la revendication 1, comprenant en outre une indentation (134) s'étendant autour de la circonférence du corps de disque (102) entre la surface d'étanchéité (108) et la surface extérieure (122) de la paroi (120).

3. Appareil selon la revendication 2, dans lequel la surface plate (128) permet à la paroi (120) de fournir la caractéristique d'écoulement de fluide à pourcentage sensiblement égal lorsque le corps de disque (102) est positionné entre environ 10 degrés et 35 degrés par rapport à une position fermée.

4. Appareil comprenant :

un corps de soupape (204) ;
un disque de soupape (100) configuré pour commander un écoulement de fluide à travers le corps de soupape (204), le disque de soupape (100) comprenant :

un premier côté (104) et un second côté (106) opposé au premier côté (104) ;
une surface d'étanchéité (108), la surface d'étanchéité (108) s'étendant autour d'une circonférence extérieure du disque de soupape (100) adjacente au premier côté (104), la surface d'étanchéité (108) ayant un rayon de courbure (110) adapté pour venir en prise de manière étanche avec un corps de soupape (204) dans une position fermée ; et

une paroi (120), la paroi (120) faisant saillie à partir du second côté (106) du disque de soupape (100) et s'étendant partiellement autour de la circonférence extérieure du disque de soupape (100), **caractérisé en ce que** la paroi (120) comprend une surface extérieure (122) adjacente à une partie de la surface d'étanchéité (108) et ayant un rayon de courbure (124) différent du rayon de courbure (110) de la surface d'étanchéité (108) et adaptée pour permettre au disque de soupape (100) de fournir une caractéristique d'écoulement de fluide à pourcentage sensiblement égal, la surface extérieure (122) définissant un enfoncement (126) comprenant une surface évidée et (502) ayant un profil incurvé ; et
une indentation (134), l'indentation (134) s'étendant autour de la circonférence extérieur du corps de disque (102) entre la surface d'étanchéité (108) et la surface extérieure (122) de la paroi (120), la surface évidée (502) s'étendant de l'indentation (134) vers une extrémité (132) de la paroi (120), dans lequel la surface extérieure (122) et l'enfoncement (126) fournissent une caractéristique d'écoulement de fluide à pourcentage sensiblement égal lorsque le disque de soupape (100) effectue une transition entre la position fermée et une position ouverte.

5. Appareil selon la revendication 4, dans lequel l'enfoncement (126) fournit la caractéristique d'écoulement de fluide à pourcentage sensiblement égal lorsque le disque de soupape (100) est orienté entre environ 10 degrés et 35 degrés par rapport à la position fermée.

6. Appareil selon la revendication 4 ou 5, dans lequel le disque de soupape (100) définit une ouverture (112) adaptée pour recevoir un arbre (206), l'ouverture (112) s'étendant perpendiculairement à un axe central du disque de soupape (100), le disque de soupape (100) étant configuré pour tourner autour d'un axe longitudinal de l'ouverture (112).

7. Appareil selon la revendication 6, dans lequel l'enfoncement est à peu près équidistant entre une première ouverture de l'ouverture (112) et une seconde ouverture opposée de l'ouverture (112).

**FIG. 1A**

**FIG. 1B**

**FIG. 2A**

**FIG. 2B**

**FIG. 2C**

FIG. 3

**FIG. 4A**

**FIG. 4B**

**FIG. 5A**

**FIG. 5B**

**FIG. 6A**

**FIG. 6B**

**FIG. 7A**

**FIG. 7B**

**EP 3 334 963 B1**

## REFERENCES CITED IN THE DESCRIPTION

**Patent documents cited in the description**

- US 20040149952 A1
- US 20040051071 A1